# EUROPÄISCHE PATENTSCHRIFT

(11) **EP 1 765 557 B1**
(45) Veröffentlichungstag und Bekanntmachung des Hinweises auf die Patenterteilung: **08.04.2009**
(21) Anmeldenummer: 05770537.8
(22) Anmeldetag: 14.07.2005
(51) Int. Cl.: B25F 5/00, H01M 2/10

(54) **ELEKTROWERKZEUG, INSBESONDERE AKKU-ELEKTROWERKZEUG**
ELECTRIC TOOL, PARTICULARLY BATTERY-OPERATED ELECTRIC TOOL
OUTIL ELECTRIQUE, NOTAMMENT OUTIL ELECTRIQUE SANS FIL

(30) Priorität: 15.07.2004 DE 102004034092
(43) Veröffentlichungstag der Anmeldung: 28.03.2007
(73) Patentinhaber: Marquardt GmbH, 78604 Rietheim-Weilheim (DE)
(72) Erfinder: BROGHAMMER, Peter, 78573 Wurmlingen (DE)
(74) Vertreter: Eisele, Otten, Roth & Dobler
(86) Internationale Anmeldenummer: PCT/EP2005/007645
(87) Internationale Veröffentlichungsnummer: WO 2006/008057

(56) Entgegenhaltungen:
- EP-A- 0 951 965
- EP-A- 1 075 906
- EP-A- 1 110 678
- DE-A1- 10 246 761
- GB-A- 2 302 202
- US-A1- 2003 089 511

## Beschreibung

Die Erfindung betrifft ein Elektrowerkzeug nach dem Oberbegriff des Patentanspruchs 1.

Bei solchen, insbesondere als Akku-Elektrowerkzeug, ausgestalteten Elektrowerkzeugen handelt es sich um Bohrmaschinen, Schrauber, Winkelschleifer, Hobel, Fräsen oder dergleichen.

Ein aus der DE 196 04 346 A1 sowie der US 2003/0089511 A1 bekanntes Elektrowerkzeug besitzt ein Elektrowerkzeug-Gehäuse, in dem sich ein Elektromotor befindet. Zur Energieversorgung des Elektromotors dient ein Energiespeicher, und zwar ein Akku, der wiederum ein im und/oder am Elektrowerkzeug-Gehäuse befestigbares Energiespeicher-Gehäuse aufweist. Desweiteren ist im und/oder am Elektrowerkzeug-Gehäuse ein manuell betätigbares Betätigungsorgan angeordnet, mit dessen Hilfe Schaltmittel für die Energieversorgung des Elektromotors betätigbar sind.

In herkömmlicher Weise ist das Schaltmittel im Elektrowerkzeug-Gehäuse angeordnet. Und zwar im allgemeinen zusammen mit dem Betätigungsorgan als Elektrowerkzeugschalter, der wiederum im Handgriff des Elektrowerkzeugs befindlich ist. In manchen Fallen mangelt es einer solchen Anordnung an Flexibilität.

Weiter ist aus der DE 102 46 761 A1 ein Akku-Elektrowerkzeug mit einem Elektrowerkzeug-Gehäuse sowie mit einem im Elektrowerkzeug-Gehäuse befindlichen Elektromotor bekannt, wobei ein am Elektrowerkzeug-Gehäuse wechselbar angeordneter Energiespeicher für die Energieversorgung des Elektromotors dient. Im Elektrowerkzeug-Gehäuse ist ein elektrischer Schalter mit einem Betätigungsorgan angeordnet. Der Energiespeicher weist ein Energiespeicher-Gehäuse auf, in dem sich ein Mikrocontroller zur Steuerung der Energieversorgung für den Elektromotor befindet. Der Mikroprozessor ist seinerseits vom elektrischen Schalter ansteuerbar. Auch hier ist der elektrische Schalter mitsamt dem Betätigungsorgan in der Art eines Elektrowerkzeugschalters ausgebildet und im Elektrowerkzeug-Gehäuse angeordnet.

Schließlich ist in der EP 1 075 906 A2 ein Elektrogerät mit einem Elektrogerät-Gehäuse gezeigt, an dem ein Energiespeicher befestigbar ist. Der Energiespeicher besitzt ein Energiespeicher-Gehäuse, an dem ein Betätigungsorgan angeordnet ist. Ein elektrischer Schalter zum Schalten der Energieversorgung für einen im Elektrogerät-Gehäuse befindlichen Elektromotor ist davon getrennt im Elektrogerät-Gehäuse angeordnet. Die manuelle Bewegung des Betätigungsorgans wird durch ein Übertragungsmittel, das sowohl mit dem Betätigungsorgan als auch mit dem elektrischen Schalter zusammenwirkt, auf den elektrischen Schalter zu dessen Betätigung übertragen.

Der Erfindung liegt ausgehend von der DE 102 46 761 A1 die Aufgabe zugrunde, eine flexiblere Anordnung von Betätigungsorgan und Schaltmittel zu schaffen.

Diese Aufgabe wird bei einem Elektrowerkzeug mit den Merkmalen des Anspruchs 1 gelöst.

Beim erfindungsgemäßen Elektrowerkzeug sind die Schaltmittel im Energiespeicher-Gehäuse befindlich. Das Betätigungsorgan, das sich außerhalb des Energiespeicher-Gehäuses befindet, wirkt bei dessen Bewegung durch den Benutzer betätigend auf das Schaltmittel ein. Die Einwirkung des Betätigungsorgans auf das Schaltmittel kann entsprechend den Gegebenheiten im Elektxowerkzeug-Gehäuse direkt und/oder indirekt erfolgen. Vorteilhafterweise läßt sich dadurch das Betätigungsorgan weitgehend ohne Restriktionen an der gewünschten Stelle im und/oder am Elektrowerkzeug-Gehäuse anordnen, so daß die Ergonomie für den Benutzer verbessert wird.

Eine indirekte Einwirkung des Betätigungsorgans auf das Schaltmittel läßt sich in einfacher Weise dadurch realisieren, daß im Elektrowerkzeug-Gehäuse ein sowohl mit dem Betätigungsorgan als auch mit dem Schaltmittel zusammenwirkendes und/oder in Wirkverbindung bringbares Übertragungsmittel angeordnet ist. Mit Hilfe des Übertragungsmittels ist die Bewegung des Betätigungsorgans auf das Schaltmittel übertragbar. Bei dem Übertragungsmittel handelt es sich um eine Blattfeder.

Eine Schalteranordnung für ein solcherart ausgestaltetes Elektrowerkzeug besteht somit aus dem im und/oder am Elektrowerkzeug-Gehäuse befindlichen Betätigungsorgan und/oder dem im Energiespeicher-Gehäuse befindlichen Schaltmittel.

Weitere Ausgestaltungen der Erfindung sind Gegenstand der Unteransprüche.

Bei dem Schaltmittel kann es sich in kostengünstiger Weise um einen elektrischen Schalter handeln. Besonders bevorzugt ist jedoch, daß es sich bei dem Schaltmittel um einen Sensorschalter, wie einen Kraftsensor, einen Hallsensor, einen magnetoresistiven Sensor o. dgl., handelt. Ein derartiger Sensorschalter gestattet eine kompakte, platzsparende Anordnung im Energiespeicher-Gehäuse.

In bekannter Weise kann das Schaltmittel mit einer Elektronik zur Steuerung und/oder Regelung der Energieversorgung in Verbindung stehen. Diese Elektronik kann in der Art einer Pulsweitenmodulation, einer Phasenanschnittsteuerung, einer Phasenabschnittsteuerung o. dgl. arbeiten. Mit Hilfe der Elektronik wird dann der Elektromotor mit einer dem Bewegungsweg des Betätigungsorgans zugeordneten Drehzahl, einem dem Bewegungsweg des Betätigungsorgans zugeordneten Drehmoment o. dgl. betrieben. Es bietet sich nun an, die Elektronik ebenfalls im Energiespeicher-Gehäuse anzuordnen. Dadurch ist die Elektronik vor Beschädigungen im rauhen Betrieb des Elektrowerkzeugs weitgehend geschützt. Gleichzeitig kann die Elektronik zusätzlich wenigstens als Teil der Ladeelektronik zum Aufladen des Energiespeichers dienen, so daß mit einer derartigen Ausgestaltung eine Kosteneinsparung erzielbar ist.

In weiterer Ausgestaltung für die indirekte Einwirkung des Betätigungsorgans auf das Schaltmittel ist die Blattfeder in etwa mittig an einem Lager im Elektrowerkzeug-Gehäuse befestigt und erstreckt sich im Handgriff des Elektrowerkzeug-Gehäuses derart, daß die Blattfeder mit dem einen Ende mit dem Betätigungsorgan in Wirkverbindung steht sowie mit dem anderen Ende mittels des Betätigungsorgans mit dem Schaltmittel in Wirkverbindung bringbar ist. Eine solchermaßen ausgestaltete Blattfeder stellt ein kostengünstiges, einfaches und dennoch sehr funktionssicheres Übertragungsmittel dar.

Oft ist es gewünscht, daß der Elektromotor des Elektrowerkzeugs sowohl im Rechts- als auch im Linkslauf betrieben werden kann. Hierzu steht das eine Ende der Blattfeder weiter mit einem im Elektrowerkzeug-Gehäuse befindlichen Betätigungselement in Wirkverbindung. Das Lager ist als Drehlager ausgestaltet, so daß die Blattfeder mittels des Betätigungselements an dem als Befestigungsstelle dienenden Lager um eine Drehachse verschwenkbar ist. Nach Verschwenken ist das andere Ende der Blattfeder mittels des Betätigungsorgans mit einem weiteren Schaltelement in Wirkverbindung bringbar. Während das eine Schaltelement für den Betrieb des Elektromotors im Rechtslauf dient, Schaltet das weitere Schaltelement den Linkslauf des Elektromotors ein. Zweckmäßigerweise sind die beiden Schaltmittel im wesentlichen nebeneinanderliegend im Energiespeicher-Gehäuse angeordnet.

Eine weitere zweckmäßige Ausgestaltung für das Übertragungselement besteht darin, daß am anderen Ende der Blattfeder ein Ansatz befindlich ist, wobei dann die Blattfeder mittels
des Ansatzes auf das Schaltmittel einwirkt. Zum einfachen Ausgleich von Toleranzen bietet es sich an, daß bei einem als Sensorschalter ausgestalteten Schaltmittel der Ansatz über ein elastisches Element auf den Sensorschalter einwirkt. In kompakter Anordnung kann das als Sensorschalter ausgestaltete Schaltmittel in einem Gehäuseaufsatz des Energiespeicher-Gehäuses befindlich sein. Das elastische Element ist als Abschluß in einem Durchbruch an der Gehäusewand des Gehäuseaufsatzes am Energiespeicher-Gehäuse angeordnet. Das elastische Element gestattet somit nicht nur die Betätigung des im Energiespeicher-Gehäuses innenliegenden Schaltelements sondern dient damit gleichzeitig auch als Abdichtung des Durchbruchs in das Innere des Energiespeicher-Gehäuses.

In einer besonders montagefreundlichen Ausgestaltung ist die Elektronik auf einer Leiterplatte im Energiespeicher-Gehäuse befindlich. Das als Sensorschalter ausgestaltete Schaltmittel ist in etwa senkrecht abstehend auf der Leiterplatte angebracht, und zwar derart daß das Schaltmittel in den Gehäuseaufsatz hineinragt.

Zusammenfassend läßt sich zum erfindungsgemäßen Elektrowerkzeug sagen, daß sich die komplette Elektronik im Akkupack befindet. Über eine mechanische Anordnung wird die Bewegung des Schalterdrückers und des Umschalthebels für den Rechts-/Linkslauf nach unten an den Akku geleitet. Dort werden zwei Sensoren betätigt, die die Drehrichtung erkennen sowie der Steuerelektronik den Hub des Schalterdrückers weitergeben. Das Schalten der Last, also des Elektromotors, geschieht über Leistungshalbleiter. Die Umschaltfunktion für den Rechts-/Linkslauf könnte aber aus Kostengründen auch über einen herkömmlichen Polwendeschalter geschehen, der auf der Platine oder in der Griffschale sitzt.

Die derartige Anordnung eignet sich besonders für neue Akkutechnologien, beispielsweise für Li-Ionen- oder Li-Polymer-Technologien, bei denen eine zusätzliche Elektronik im Akkupack notwendig ist. Eine solche Elektronik im Akkupack dient beispielsweise zur Abschaltung der Akkuspannung bei Überlastung. Diese Elektronikbaugruppe im Akkupack wird erfindungsgemäß auch zur Drehzahleinstellung des Elektromotors verwendet, so daß auf die bisher übliche, in der Griffschale des Elektrowerkzeugs befindliche Elektronik für die Drehzahlverstellung verzichtet werden kann. Dadurch wird sowohl die Wirtschaftlichkeit als auch die Ergonomie gesteigert.

Die weiteren mit der Erfindung erzielten Vorteile bestehen insbesondere darin, daß aufgrund der Anordnung der Schaltmittel im Energiespeicher-Gehäuse die Flexibilität in der Gestaltung des Elektrowerkzeugs erhöht ist. Desweiteren kann die Ladeelektronik für den Energiespeicher im Energiespeicher-Gehäuse befindlich sein. Es bietet sich dann an, die Elektronik für die Drehzahlsteuerung und/oder -regelung ebenfalls im Energiespeicher-Gehäuse unterzubringen, so daß das Schaltmittel in unmittelbarer Nähe der Elektronik angeordnet werden kann. Desweiteren kann die Ladeelektronik wenigstens zum Teil für die Elektronik zur Drehzahlsteuerung und/oder -regelung mitverwendet werden, so daß hierdurch Kosteneinsparungen erzielbar sind. Bei Anordnung der Elektronik im Energiespeicher-Gehäuse befinden sich in der Griffschale des Elektrowerkzeugs somit nur noch mechanische Teile, wodurch die Griffschale sehr schmal gebaut werden kann. Da nur eine Platine für die Elektronik notwendig ist, können Kosten gespart werden. Außerdem wird der Verdrahtungsaufwand im Elektrowerkzeug minimiert. Desweiteren sind Zusatzfunktionen für das Elektrowerkzeug in einfacher Weise auf der Platine implementierbar. Schließlich ist auch die Kühlung für die Elektronik auf der Platine in vielfältiger und einfacher Art und Weise möglich.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: schematisch ein Elektrowerkzeug mit einem Energiespeicher,
- Fig. 2: eine Griffschale für das Elektrowerkzeug und
- Fig. 3: die Griffschale aus Fig. 2 in perspektivischer Ansicht.

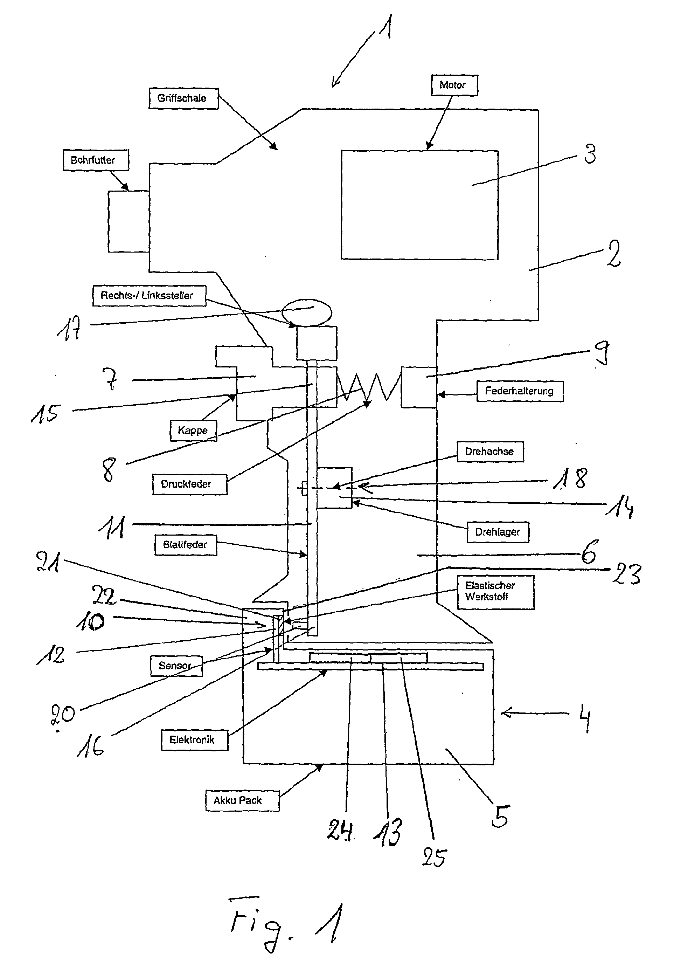

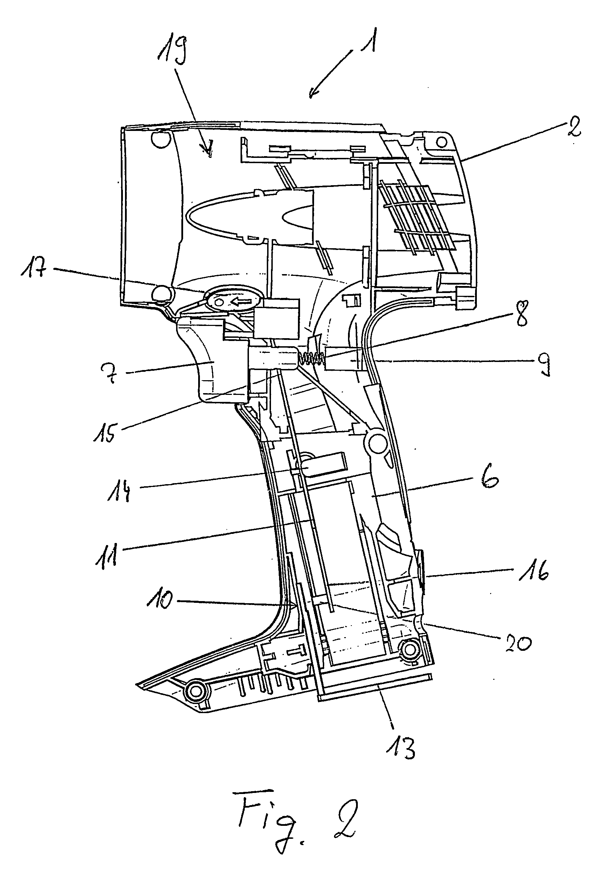

In Fig. 1 ist in schematischer Art ein Elektrowerkzeug 1, bei dem es sich um eine Akku-Bohrmaschine handelt, gezeigt. Das Elektrowerkzeug 1 besitzt ein Elektrowerkzeug-Gehäuse 2, das aus zwei als Griffschalen 19 ausgebildeten Hälften besteht. Eine Griffschale 19 ist näher in Fig. 2 in der Weise gezeigt, daß das Innere des Elektrowerkzeug-Gehäuses 2 zu sehen ist. Wie weiter anhand von Fig. 1 zu erkennen ist, befindet sich im Elektrowerkzeug-Gehäuse 2 ein Elektromotor 3. Für die Energieversorgung des Elektromotors 3 dient ein Energiespeicher 4, bei dem es sich insbesondere um eine Art von Akku für die Spannungsversorgung des Elektromotors 3 handelt. Der Energiespeicher 4 weist ein Energiespeicher-Gehäuse 5 auf, das im und/oder am Elektrowerkzeug-Gehäuse 2 befestigbar ist, und zwar durch Einstecken in den Handgriff 6 am Elektrowerkzeug-Gehäuse 2.

Im und/oder am Elektrowerkzeug-Gehäuse 2 ist ein Betätigungsorgan 7 zum Betätigen eines Schaltmittels 10 für die Energieversorgung des Elektromotors 3 angeordnet. Das Betätigungsorgan 7 ist vom Benutzer gegen die Kraft einer Druckfeder 8, die sich an einer Federhalterung 9 im Handgriff 6 abstützt, durch eine Druckbewegung manuell betätigbar, um so die Spannungsversorgung für den Elektromotor 3 ein- oder auszuschalten. Entgegen der bisherigen Anordnung befindet sich das Schaltmittel 10 im Energiespeicher-Gehäuse S. Das Betätigungsorgan 7 wirkt nun bei dessen Bewegung direkt und/oder indirekt betätigend auf das Schaltmittel 10 ein. Zur indirekten Übertragung der Bewegung des Betätigungsorgans 7 auf das Schaltmittel 10 ist in zweckmäßiger Ausgestaltung im Elektrowerkzeug-Gehäuse 2 ein Übertragungsmittel 11 angeordnet, das sowohl mit dem Betätigungsorgan 7 als auch mit dem Schaltmittel 10 zusammenwirkt und/oder mit dem Schaltmittel 10 in Wirkverbindung bringbar ist.

Bei dem Schaltmittel 10 kann es sich um einen in herkömmlicher Art und Weise ausgebildeten elektrischen Schalter mit einem elektromechanischen Kontaktsystem handeln. Besonders bevorzugt ist jedoch, wenn es sich bei dem Schaltmittel 10 um einen Sensorschalter 12, wie einen Kraftsensor, einen Hallsensor, einen magnetoresistiven Sensor, einen kapazitiven Drucksensor o. dgl., handelt.

Falls gewünscht, kann die Drehzahl des Elektromotors 3 steuer- und/oder regelbar sein, so daß die Drehzahl entsprechend dem Verstellweg des Betätigungsorgans 7, der vom Benutzer durch Drücken am Betätigungsorgan 7 erzeugt wird, eingestellt wird. Das Schaltmittel 10 steht dann mit einer in Fig. 1 schematisch angedeuteten Elektronik 24 zur Steuerung und/oder Regelung der Spannungsversorgung für den Elektromotor 3 in Verbindung. Die Elektronik 24 kann in der Art einer Pulsweitenmodulation-Schaltung ausgestaltet sein, falls der Elektromotor 3 mit Gleichspannung betrieben wird. Bei einem mit Wechselspannung betriebenen Elektromotor 3 eignet sich eine Phasenanschnittsteuerung, eine Phasenabschnittsteuerung o. dgl. als Elektronik 24. Selbstverständlich kann der Elektromotor 3 auch mit einem dem Verstellweg des Betätigungsorgans 7 zugeordneten Drehmoment o. dgl. mittels der Elektronik 24 betreibbar sein. Die Elektronik 24 ist ebenfalls im Energiespeicher-Gehäuse 5 angeordnet, und zwar auf einer Leiterplatte 13. Auf der Leiterplatte 13 kann gleichzeitig die Ladeschaltung 25 für den Energiespeicher 4 befindlich sein, wobei gegebenenfalls elektrische und/oder elektrische Bauteile sowohl für die Elektronik 24 als auch für Ladeschaltung 25 gleichzeitig verwendbar sind.

In weiterer Ausgestaltung wird eine Blattfeder als Übertragungsmittel 11 verwendet. Die Blattfeder 11 ist in etwa mittig an einem Lager 14 im Elektrowerkzeug-Gehäuse 2 befestigt. Dabei ist die Blattfeder 11 sich derart im Handgriff 6 des Elektrowerkzeug-Gehäuses 2 erstreckend angeordnet, daß die Blattfeder 11 mit einem Ende 15 mit dem Betätigungsorgan 7 in Wirkverbindung steht sowie mit dem anderen Ende 16 mittels des Betätigungsorgans 7 mit dem Schaltmittel 10 in Wirkverbindung bringbar ist.

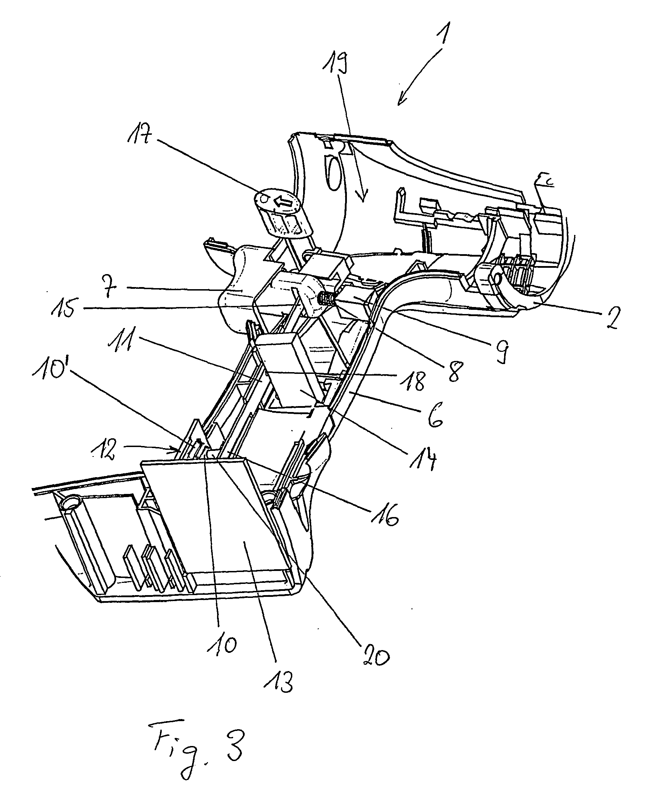

Desweiteren ist die Drehrichtung des Elektromotors 3 zwischen Rechts- und Linkslauf umschaltbar. Hierzu befindet sich im Elektrowerkzeug-Gehäuse 2 ein vom Benutzer verschiebbares Betätigungselement 17, das ebenfalls mit dem einen Ende 15 der Blattfeder 11 in Wirkverbindung steht. Das Lager 14 ist als Drehlager ausgestaltet, so daß die Blattfeder 11 mittels des Betätigungselements 17 an dem als Befestigungsstelle dienenden Lager 14 um eine Drehachse 18 verschwenkbar ist. Nach Verschwenken der Blattfeder 11 ist dann dessen anderes Ende 16 mittels des Betätigungsorgans 7 mit einem weiteren Schaltelement 10' in Wirkverbindung bringbar. Die beiden Schaltelemente 10, 10' sind im wesentlichen nebeneinanderliegend im Energiespeicher-Gehäuse 5 angeordnet, wie der Fig. 3 zu entnehmen ist.

Wie in Fig. 1 weiter gezeigt ist, befindet sich am anderen Ende 16 der Blattfeder 11 ein Ansatz 20. Mittels des Ansatzes 20 wirkt die Blattfeder 11 auf das Schaltmittel 10, 10' ein. Ist das Schaltmittel 10, 10' als Sensorschalter 12 ausgestaltet, so wirkt der Ansatz 20 zweckmäßigerweise über ein elastisches Element 21 auf den Sensorschalter 12 ein. Das als Sensorschalter 12 ausgestaltete Schaltmittel 10, 10' befindet sich in einem Gehäuseaufsatz 22 des Energiespeicher-Gehäuses 5. Zweckmäßigerweise ist dann das elastische Element 21 als wandartiger Abschluß in einem Durchbruch an der Gehäusewand 23 des Energiespeicher-Gehäuses 5, und zwar des Gehäuseaufsatzes 22, angeordnet. Aufgrund der Abdichtung des Durchbruches an der Gehäusewand 23 mittels des elastischen Elements 21 ist der Sensorschalter 12 zwar geschützt im Inneren des Energiespeicher-Gehäuses 5 sowie dennoch von außen durch das Übertragungsmittel 11 betätigbar.

Wie bereits erwähnt, ist die Elektronik 24 zur Ansteuerung des Elektromotors 3 auf einer Leiterplatte 13 im Energiespeicher-Gehäuse 5 befindlich. Es bietet sich dann an, daß das als Sensorschalter 12 ausgestaltete Schaltmittel 10, 10' in etwa senkrecht abstehend auf der Leiterplatte 13 angebracht ist, und zwar derart daß das als Sensorschalter 12 ausgestaltete Schaltmittel 10, 10' in den Gehäuseaufsatz 22 hineinragt.

Nachfolgend soll noch kurz die Wirkungsweise der erfindungsgemäßen Anordnung näher beschrieben werden.

Durch die Betätigung des Benutzers mittels Drücken des als Kappe ausgestalteten Betätigungsorgans 7 wird die in der Drehachse 18 fixierte Blattfeder 11 auf das aus elastischem Werkstoff bestehende Element 21, das in dem als Akku-Pack ausgestalteten Energiespeicher 4 montiert ist, gedrückt. Dabei entkoppelt die Blattfeder den Bewegungsweg des Betätigungsorgans 7 und den Weg auf dem Sensorschalter 12. Aufgrund der besonderen Werkstoffeigenschaften der Blattfeder 11, beispielsweise deren E-Modul, wird sich der Weg auf dem Sensorschalter 12 dabei minimieren, so daß der Bewegungsweg des Betätigungsorgans 7 im wesentlichen in einen korrespondierenden, auf den Sensorschalter 12 einwirkenden Druck umgesetzt wird.

Die Funktion Rechts- / Linkslauf des Elektrowerkzeugs 1 wird durch zwei als Sensorschalter 12 ausgestaltete Schaltmittel 10, 10' realisiert, die im Energiespeicher 4 nebeneinander installiert sind. Die beiden Schaltmittel 10, 10' werden durch das elastische Element 21 geschützt. Jedes einzelne Schaltmittel 10, 10' ist für eine Richtung zuständig. Bei Rechts- oder Linkslauf wird die Blattfeder 11 um die Drehachse 18 des Lagers 14 gedreht und somit vor den jeweils für die gewünschte Richtung zuständigen Sensor entsprechend dem jeweiligen Schaltmittel 10, 10' positioniert.

Das Betätigungselement 17 für die Rechts-/ Linksumschaltung ist mitsamt dem Betätigungsorgan 7 für die Ein- und Umschaltsperrung verantwortlich. Die Druckfeder 8 ist für die Sicherheit der kompletten Rückstellung verantwortlich.

Die Schalteranordnung für ein Elektrowerkzeug 1 gemäß der vorstehenden Beschreibung besteht somit aus dem im und/oder am Elektrowerkzeug-Gehäuse 2 befindlichen Betätigungsorgan 7 und/oder dem im Energiespeicher-Gehäuse 5 befindlichen Schaltmittel 10. Die Erfindung ist jedoch nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. Die beschriebene Schalteranordnung, kann nicht nur bei Elektrowerkzeugen sondern auch bei sonstigen Elektrogeräten, die mit einem Energiespeicher versehen sind, wie Elektrohaushaltsgeräten, Elektrogartengeräten, Werkzeugmaschinen o. dgl., Verwendung finden.

### Bezugszeichen-Liste:

- 1:: Elektrowerkzeug
- 2:: Elektrowerkzeug-Gehäuse
- 3:: Elektromotor
- 4:: Energiespeicher
- 5:: Energiespeicher-Gehäuse
- 6:: Handgriff
- 7:: Betätigungsorgan
- 8:: Druckfeder
- 9:: Federhalterung
- 10,10':: Schaltmittel
- 11:: Übertragungsmittel / Blattfeder
- 12:: Sensorschalter
- 13:: Leiterplatte
- 14:: Lager / Drehlager (für Blattfeder)
- 15,16:: Ende (von Blattfeder)
- 17:: Betätigungselement
- 18:: Drehachse
- 19:: Griffschale
- 20:: Ansatz
- 21:: elastisches Element
- 22:: Gehäuseaufsatz
- 23:: Gehäusewand
- 24:: Elektronik
- 25:: Ladeschaltung / Ladeelektronik

## Patentansprüche

1. Elektrowerkzeug, insbesondere Akku-Elektrowerkzeug, mit einem Elektrowerkzeug-Gehäuse (2), mit einem im Elektrowerkzeug-Gehäuse (2) befindlichen Elektromotor (3), mit einem Energiespeicher (4) in der Art eines Akkus für die Energieversorgung des Elektromotors (3), sowie mit einem im und/oder am Elektrowerkzeug-Gehäuse (2) angeordneten Betätigungsorgan (7) zum Betätigen eines Schaltmittels (10) für die Energieversorgung des Elektromotors (3), wobei der Energiespeicher (4) ein Energiespeicher-Gehäuse (5) aufweist, wobei das Energiespeicher-Gehäuse (5) im und/oder am Elektrowerkzeug-Gehäuse (2) befestigbar ist, wobei das Schaltmittel (10) im Energiespeicher-Gehäuse (5) befindlich ist, und wobei das Betätigungsorgan (7) bei dessen Bewegung betätigend auf das Schaltmittel (10) einwirkt, **dadurch gekennzeichnet, daß** im Elektrowerkzeug-Gehäuse (2) ein sowohl mit dem Betätigungsorgan (7) als auch mit dem Schaltmittel (10) zusammenwirkendes und/oder in Wirkverbindung bringbares Übertragungsmittel (11) angeordnet ist, derart daß die Bewegung des Betätigungsorgans (7) auf das Schaltmittel (10) übertragbar ist, und daß es sich bei dem Obertragringsmitiel (11) um eine Blattfeder handelt.

2. Elektrowerkzeug nach Anspruch 1, **dadurch gekennzeichnet, daß** es sich bei dem Schaltmittel (10) um einen elektrischen Schalter handelt.

3. Elektrowerkzeug nach Anspruch 1, **dadurch gekennzeichnet, daß** es sich bei dem Schaltmittel (10) um einen Sensorschalter, (12), wie einen Kraftsensor, einen Hallsensor oder einen magnetoresistiven Sensor, handelt.

4. Elektrowerkzeug nach Anspruch 1, 2 oder 3, **dadurch gekennzeichnet, daß** das Schaltmittel (10) mit einer Elektronik (24) zur Steuerung und/oder Regelung der Energieversorgung in der Art einer Pulsweitenmodulation, einer Phasenanschnittsteuerung oder einer Phasenabschnittsteuerung in Verbindung steht, und zwar derart daß der Elektromotor (3) mit einer dem Bewegungsweg des Betätigungsorgans (7) zugeordneten Drehzahl oder einem dem Bewegungsweg des Betätigungsorgans (7) zugeordneten Drehmoment betreibbar ist, daß die Elektronik (24) im Energiespeicher-Gehäuse (5) angeordnet ist, und daß die Elektronik (24) zusätzlich wenigstens als Teil der Ladeelektronik (25) zum Aufladen des Energiespeichers (4) dient.

5. Elektrowerkzeug nach einem der Ansprüche 1 bis 4, **dadurch gekennzeichnet, daß** die Blattfeder (11) in etwa mittig an einem Lager (14) im Elektrowerkzeug-Gehäuse (2) befestigt ist, und daß die Blattfeder (11) im Elektrowerkzeug-Gehäuse (2) sich derart erstreckend angeordnet ist, daß die Blattfeder (11) mit dem einen Ende (15) mit dem Betätigungsorgan (7) in Wirkverbindung steht sowie mit dem anderen Ende (16) mittels des Betätigungsorgans (7) mit dem Schaltmittel (10) in Wirkverbindung bringbar ist.

6. Elektrowerkzeug.nach einem der Ansprüche 1 bis 5, **dadurch gekennzeichnet, daß** das eine Ende (15) der Blattfeder (11) weiter mit einem im Elektrowerkzeug-Gehäuse (2) befindlichen Betätigungselement (17) in Wirkverbindung steht, daß das Lager (14) als Drehlager ausgestaltet ist, so daß die Blattfeder (11) mittels des Betätigungselements (17) an dem als Befestigungsstelle dienenden Lager (14) um eine Drehachse (18) verschwenkbar ist, und daß nach Verschwenken das andere Ende (16) der Blattfeder (11) mittels des Betätigungsorgans (7) mit einem weiteren Schaltelement (10') in Wirkverbindung bringbar ist.

7. Elektrowerkzeug nach Anspruch 6, **dadurch gekennzeichnet, daß** die beiden Schaltmittel (10, 10') im wesentlichen nebeneinanderliegend im Energiespeicher-Gehäuse (5) angeordnet sind.

8. Elektrowerkzeug nach einem der Ansprüche 1 bis 7, **dadurch gekennzeichnet, daß** am anderen Ende (16) der Blattfeder (11) ein Ansatz (20) befindlich ist, und daß die Blattfeder (11) mittels des Ansatzes (20) auf das Schaltmittel (10, 10') einwirkt.

9. Elektrowerkzeug nach Anspruch 8, **dadurch gekennzeichnet, daß** bei einem als Sensorschalter (12) ausgestalteten Schaltmittel (10, 10') der Ansatz (20) über ein elastisches Element (21) auf den Sensorschalter (12) einwirkt.

10. Elektrowerkzeug nach einem der Ansprüche 1 bis 9, **dadurch gekennzeichnet, daß** das als Sensorschalter (12) ausgestaltete Schaltmittel (10, 10') in einem Gehäuseaufsatz (22) des Energiespeicher-Gehäuses (5) befindlich ist.

11. Elektrowerkzeug nach einem der Ansprüche 1 bis 10, **dadurch gekennzeichnet, daß** das elastische Element (21) als Abschluß in einem Durchbruch an der Gehäusewand (23) des Energiespeicher-Gehäuses (5) angeordnet ist.

12. Elektrowerkzeug nach einem der Ansprüche 1 bis 11, **dadurch gekennzeichnet, daß** die Elektronik (24) auf einer Leiterplatte (13) im Energiespeicher-Gehäuse (5) befindlich ist.

13. Elektrowerkzeug nach Anspruch 12, **dadurch gekennzeichnet, daß** das als Sensorschalter (12) ausgestaltete Schaltmittel (10, 10') in etwa senkrecht abstehend auf der Leiterplatte (13) angebracht ist, derart daß das als Sensorschalter (12) ausgestaltete Schaltmittel (10, 10') in den Gehäuseaufsatz (22) hineinragt.

## Claims

1. Electric tool, in particular a rechargeable battery-operated electric tool, with an electric tool housing (2), an electric motor (3) located in the electric tool housing (2), an energy storage device (4) in the form of a rechargeable battery for supplying power to the electric motor (3), and an actuating element (7) arranged in and/or on the electric tool housing (2) for operating a switching means (10) for the power supply to the electric motor (3), wherein the energy storage device (4) comprises an energy storage device housing (5), wherein the energy storage device housing (5) can be secured in and/or on the electric tool housing (2), wherein the switching means (10) is located in the energy storage device housing (5), and wherein the actuating element (7) during its movement actuates the switching means (10), **characterised in that** in the electric tool housing (2) a transmission means (11) is arranged, which interacts with and/or can be brought into active connection with both the actuating element (7) and the switching means (10), such that the movement of the actuating element (7) can be transmitted to the switching means (10), and **in that** the transmission means (11) consists of a leaf spring.

2. Electric tool according to claim 1, **characterised in that** the switching means (10) is an electric switch.

3. Electric tool according to claim 1, **characterised in that** the switching means (10) is a sensor switch (12), such as a power sensor, a Hall sensor or a magnetoresistant sensor.

4. Electric tool according to claim 1, 2, or 3, **characterised in that** the switching means (10) is connected to an electronic system (24) for controlling and/or regulating the power supply in the manner of pulse-width modulation, phase control or generalised phase control, such that the electric motor (3) can be operated at a speed of revolution allocated to the movement path of the actuating element (7) or a torque allocated to the movement path of the actuating element (7), **in that** the electronic system (24) is arranged in the energy storage device housing (5), and **in that** the electronic system (24) is also used at least as part of the charging electronic system (25) for charging the energy storage device (4).

5. Electric tool according to one of claims 1 to 4, **characterised in that** the leaf spring (11) is secured approximately centrally on a bearing (14) in the electric tool housing (2), and **in that** the leaf spring (11) is arranged in the electric tool housing (2) extending in such a way that the leaf spring (11) is in active connection at one end (15) with the actuating element (7) and at the other end (16) can be brought into active connection with the switching means (10) by means of the actuating element (7).

6. Electric tool according to one of claims 1 to 5, **characterised in that** one end (15) of the leaf spring (11) is also in active connection with an actuating element (17) located in the electric tool housing (2), **in that** the bearing (14) is designed in the form of a rotary bearing, so that the leaf spring (11) can be pivoted by means of the actuating element (17) on the bearing (14) acting as a securing point about a rotational axis (18), and **in that** after the pivoting the other end (16) of the leaf spring (11) can be brought into active connection with a further switching element (10') by means of the actuating element (7).

7. Electric tool according to claim 6, **characterised in that** the two switching means (10, 10') are arranged to be substantially adjacent to one another in the energy storage device housing (5).

8. Electric tool according to one of claims 1 to 7, **characterised in that** at the other end (16) of the leaf spring (11) a shoulder (20) is provided, and **in that** the leaf spring (11) acts on the switching means (10, 10') by means of the shoulder (20).

9. Electric tool according to claim 8, **characterised in that** with a switching means (10, 10') designed in the form of a sensor switch (12) the shoulder (20) acts via an elastic element (21) on the sensor switch (12).

10. Electric switch according to one of claims 1 to 9, **characterised in that** the switching means (10, 10') designed in the form of a sensor switch (12) is located in a housing attachment (22) of the energy storage device housing (5).

11. Electric tool according to one of claims 1 to 10, **characterised in that** the elastic element (21) is arranged as a termination in an opening on the housing wall (23) of the energy storage device housing (5).

12. Electric tool according to one of claims 1 to 11, **characterised in that** the electronic system (24) is located on a circuit board (13) in the energy storage device housing (5).

13. Electric tool according to claim 12, **characterised in that** the switching means (10, 10') designed in the form of sensor switch (12) is attached to project approximately perpendicularly on the circuit board (13), such that the switching means (10, 10') designed in the form of a sensor switch (12) projects into the housing attachment (22).

## Revendications

1. Outil électrique, notamment outil électrique à accumulateur, avec un boîtier d'outil électrique (2), avec un moteur électrique (3) situé dans le boîtier d'outil électrique (2), avec un réservoir d'énergie (4) à la manière d'un accumulateur pour l'alimentation en énergie du moteur électrique (3) ainsi qu'avec un organe d'actionnement (7) agencé dans et/ou sur le boîtier d'outil électrique (2) destiné à actionner un dispositif de commutation (10) pour l'alimentation en énergie du moteur électrique (3), le réservoir d'énergie (4) présentant un boîtier de réservoir d'énergie (5), le boîtier de réservoir d'énergie (5) pouvant être fixé dans et/ou sur le boîtier d'outil électrique (2), le dispositif de commutation (10) se trouvant dans le boîtier de réservoir d'énergie (5) et l'organe d'actionnement (7) agissant lors de son déplacement de manière à actionner le dispositif de commutation (10),
**caractérisé en ce que,** dans le boîtier d'outil électrique (2), il est agencé un dispositif de transmission (11) pouvant être amené en liaison active et/ou coopérant avec aussi bien l'organe d'actionnement (7) que le dispositif de commutation (10) de telle sorte que le déplacement de l'organe d'actionnement (7) puisse être transmis au dispositif de commutation (10), et **en ce que** le dispositif de transmission (11) est un ressort à lame.

2. Outil électrique selon la revendication 1,
**caractérisé en ce que** le dispositif de commutation (10) est un commutateur électrique.

3. Outil électrique selon la revendication 1,
**caractérisé en ce que** le dispositif de commutation (10) est un commutateur à capteur (12), tel qu'un capteur de force, un capteur à effet Hall ou un capteur magnéto-résistif.

4. Outil électrique selon la revendication 1, 2 ou 3,
**caractérisé en ce que** le dispositif de commutation (10) est en relation avec une unité électronique (24) pour la commande et/ou la régulation de l'alimentation en énergie à la manière d'une modulation d'impulsions en largeur, d'une commande de coupure en début de phase ou d'une commande de coupure en fin de phase, et ce de telle façon que le moteur électrique (3) puisse être actionné avec une vitesse de rotation associée à la course de déplacement de l'organe d'actionnement (7) ou avec un couple associé à la course de déplacement de l'organe d'actionnement (7), **en ce que** l'unité électronique (24) est agencée dans le boîtier de réservoir d'énergie (5) et **en ce que** l'unité électronique (24) sert en plus au moins en tant que partie de l'électronique de charge (25) pour le chargement du réservoir d'énergie (4).

5. Outil électrique selon l'une des revendications 1 à 4,
**caractérisé en ce que** le ressort à lame (11) est fixé à peu près au centre sur un palier (14) dans le boîtier d'outil électrique (2) et **en ce que** le ressort à lame (11) s'étend dans le boîtier d'outil électrique (2) de telle manière qu'une extrémité (15) du ressort à lame (11) est en liaison active avec l'organe d'actionnement (7) et que l'autre extrémité (16) peut être amenée en liaison active avec le dispositif de commutation (10) au moyen de l'organe d'actionnement (7).

6. Outil électrique selon l'une des revendications 1 à 5,
**caractérisé en ce que** l'extrémité (15) du ressort à lame (11) est par ailleurs en liaison active avec un élément d'actionnement (17) situé dans le boîtier d'outil électrique (2), **en ce que** le palier (14) est réalisé sous la forme d'un coussinet de pivotement de sorte que le ressort à lame (11) peut être basculé autour d'un axe de pivotement (18) au moyen de l'élément d'actionnement (17) sur le palier (14) faisant office de point de fixation, et **en ce que**, après le basculement, l'autre extrémité (16) du ressort à lame (11) peut être amenée en liaison active avec un autre élément de commutation (10') au moyen de l'organe d'actionnement (7).

7. Outil électrique selon la revendication 6,
**caractérisé en ce que** les deux dispositifs de commutation (10, 10') sont essentiellement agencés l'un à côté de l'autre dans le boîtier de réservoir d'énergie (5).

8. Outil électrique selon l'une des revendications 1 à 7,
**caractérisé en ce qu'**un talon (20) est situé à l'autre extrémité (16) du ressort à lame (11) et **en ce que** le ressort à lame (11) agit au moyen du talon (20) sur le dispositif de commutation (10, 10').

9. Outil électrique selon la revendication 8,
**caractérisé en ce que,** dans le cas d'un dispositif de commutation (10, 10') réalisé sous la forme d'un commutateur à capteur (12), le talon (20) agit sur le commutateur à capteur (12) par le biais d'un élément élastique (21).

10. Outil électrique selon l'une des revendications 1 à 9,
**caractérisé en ce que** le dispositif de commutation (10, 10') réalisé sous la forme d'un commutateur à capteur (12) se trouve dans un élément rapporté (22) du boîtier de réservoir d'énergie (5).

11. Outil électrique selon l'une des revendications 1 à 10,
**caractérisé en ce que** l'élément élastique (21) est agencé en tant que terminaison dans une ouverture ménagée sur la paroi (23) du boîtier de réservoir d'énergie (5).

12. Outil électrique selon l'une des revendications 1 à 11,
**caractérisé en ce que** l'unité électronique (24) est située sur une carte de circuits imprimés (13) dans le boîtier de réservoir d'énergie (5).

13. Outil électrique selon la revendication 12,
**caractérisé en ce que** le dispositif de commutation (10, 10') réalisé sous la forme d'un commutateur à capteur (12) est monté de manière à peu près perpendiculaire sur la carte à circuits imprimés (13) et en s'éloignant de celle-ci de telle façon que le dispositif de commutation (10, 10') réalisé sous la forme d'un commutateur à capteur (12) dépasse à l'intérieur de l'élément rapporté de boîtier (22).
